# EUROPÄISCHE PATENTSCHRIFT

(11) **EP 2 423 150 B1**
(45) Veröffentlichungstag und Bekanntmachung des Hinweises auf die Patenterteilung: **27.03.2013**
(21) Anmeldenummer: 11175678.9
(22) Anmeldetag: 28.07.2011
(51) Int. Cl.: B66C 23/74, B66C 23/78, F16B 39/00, B66C 23/62

(54) **Einstellbares Fußlager**
Adjustable base bearing
Palier inférieur réglable

(30) Priorität: 24.08.2010 DE 202010011720 U
(43) Veröffentlichungstag der Anmeldung: 29.02.2012
(73) Patentinhaber: Manitowoc Crane Group France SAS, 69130 Ecully (FR)
(72) Erfinder: Schröder, Dierk, 26197 Grossenkneten (DE)
(74) Vertreter: Rögner, Jürgen

(56) Entgegenhaltungen:
- EP-A1- 1 098 094
- JP-A- 7 137 990
- JP-A- 8 270 016
- US-A- 3 077 913
- US-A- 3 891 095

## Beschreibung

Das einstellbare Fußlager umfasst eine Gewindemutter mit einem Innengewinde, einen Lagerfuß mit einem Außengewinde der in die Gewindemutter eingeschraubt werden kann und ein Sicherungselement mit dem der eingeschraubte Lagerfuß in der Gewindemutter in der eingeschraubten Position gesichert werden kann. Die Erfindung betrifft weiterhin eine einstellbare Fußlagerung für Kranbauteile.

Derzeit werden die Kranbauteile, wie zum Beispiel die Gegengewicht-Grundplatten für mobile Kräne auf am Unterwagen vorbereitete Ablagen gelegt. Mittels Mehrfachanschlägen wird aufwändig versucht, die Grundplatten in eine Lage auszurichten, die ein einfaches Auflegen der Gegengewichtsplatten auf die Grundplatte erlaubt. Die Mehrfachanschläge sind fest mit dem Unterwagen verbunden und können nicht verstellt werden, zum Beispiel beim Wechsel der Grundplatte.

Ein Fußlager gemäß den Oberbegriffe des Anspruchs 1 ist aus US 3891095 A bekannt.

Es ist eine Aufgabe der Erfindung ein Fußlager und eine Fußlagerung für Kranbauteile zur Verfügung zu stellen, die eingestellt werden können.

Diese Aufgabe wird erfindungsgemäß durch das einstellbares Fußlager nach Anspruch 1 und die einstellbare Fußlagerung für Kranbauteile nach Anspruch 8 gelöst.

Bei der Erfindung nach dem Anspruch 8 handelt es sich um eine einstellbare Fußlagerung für Kranbauteile mit einer Grundplatte mit einer Bohrung, einer Gewindemutter mit einem Innengewinde, wobei die Gewindemutter zumindest teilweise in der Bohrung in der Grundplatte sitzt und dort fest mit der Grundplatte verbunden ist, einem Lagerfuß mit einem Außengewinde das in das Innengewinde der Gewindemutter von Hand oder mittels eines Werkzeuges ein- und ausschraubbar ist und einem Sicherungselement, das den Lagerfuß in der eingeschraubten Position sichert.

Das heißt, die Grundplatte weist eine oder mehrere Bohrungen auf, wobei in eine, mehrere oder jede der Bohrungen je eine Gewindemutter eingesteckt werden kann. Die Gewindemutter wird in der Bohrung mit der Grundplatte verbunden, so dass sie nicht mehr aus der Grundplatte herausfallen kann. Die Gewindemutter weist ein Innengewinde auf, in das ein Lagerfuß mit einem Außengewinde eingeschraubt werden kann. Jeder der Lagerfüße wird dann in seiner eingeschraubten Position mittels eines Sicherungselements gesichert, so dass der Lagerfuß weder weiter in die Gewindemutter eingeschraubt, noch wieder aus der Gewindemutter herausgeschraubt werden kann. Der mittels des Sicherungselements gesicherte Lagerfuß kann sich mit anderen Worten relativ zu der Gewindemutter nicht mehr bewegen, weder linear verschieben noch verdrehen.

Bei den Bohrungen in der Grundplatte handelt es sich bevorzugt um Durchgangsbohrungen, die sich von einer Oberseite der Grundplatte durchgehend bis zu einer Unterseite der Grundplatte erstrecken. Weniger bevorzugt kann es sich auch um Sackbohrungen handeln, in die der Lagerfuß eingeschraubt und gesichert wird, wobei jeder Lagerfuß im eingeschraubten und gesicherten Zustand über die Grundplatte vorsteht. Dabei wird jeder Lagerfuß so weit in die Sackbohrung eingeschraubt und in dieser Position gesichert, dass die auf die Lagerfüße gestellte Grundplatte ausgerichtet ist.

Handelt es sich bei den Bohrungen um Durchgangsbohrungen, so ist die Gewindemutter entweder ganz in der Bohrung aufgenommen, steht also weder an der Oberseite noch an der Unterseite von der Grundplatte ab, oder die Gewindemutter steht an der Oberseite und/oder der Unterseite von der Grundplatte ab.

Die Gewindemutter kann in der Bohrung zum Beispiel eingeschweißt oder in die Bohrung eingepresst werden, um den sicheren Halt zu gewähren. Die Außenform der Gewindemutter kann dabei beliebig sein, bevorzugt entspricht sie im Wesentlichen der Form der Bohrung.

Der Lagerfuß kann einen Abschnitt mit dem Außengewinde und wenigstens einen Abschnitt ohne Außengewinde aufweisen, bevorzugt weist es den einen Abschnitt mit dem Außengewinde und in Längsrichtung gesehen vor und hinter diesem Abschnitt je einen sich anschließenden Abschnitt ohne Außengewinde auf.

Der Lagerfuß ist bevorzugt länger als die Gewindemutter und weist an einer Seite einen Abschnitt auf, an dem ein Werkzeug angesetzt werden kann, um den Lagerfuß in die Gewindemutter einzuschrauben. Der Gewindeabschnitt des Lagerfußes kann der Baulänge des Gewindes der Gewindemutter entsprechen. Weist der Lagerfuß beidseitig des Abschnitts mit Außengewinde je einen Abschnitt ohne Gewindeabschnitt auf, so könne, bei voll in das Innengewinde der Gewindemutter eingeschraubtem Außengewinde des Lagerfußes, die beiden Abschnitte ohne Außengewinde von der Ober- bzw. der Unterseite der Grundplatte abstehen.

Zum Justieren oder Ausrichten der Grundplatte kann diese dann auf die Auflagefläche gelegt werden und mittels der Lagerfüße, die einzeln in die Gewindemutter eingeschraubt bzw. durch die Gewindemutter durchgeschraubt werden können, ausgerichtet werden. Die Länge des über die Unterseite der Grundplatte vorstehenden Teils des Lagerfußes wird dabei durch Einschrauben des Lagerfußes in die Gewindemutter verändert, und die Lage der Grundplatte zur Unterlage entsprechend eingestellt. Mittels der Lagerfüße kann die Grundplatte so exakt ausgerichtet werden.

Zumindest der Bereich zum Ansetzen des Werkzeugs kann eine andere Form aufweisen, als der Bereich mit dem Außengewinde. So wird der Querschnitt des Lagerfußes mit dem Außengewinde in aller Regel rund sein, während der Querschnitt des Bereichs an dem das Werkzeug angesetzt wird zum Beispiel quadratisch, dreieckig, sechseckig, vieleckig, oval oder sternförmig gebildet sein kann. Formen, die die Benutzung von Standardwerkzeugen erlauben, sind dabei bevorzugt.

Um zu verhindern, dass die Positionen der Lagerfüße in den Gewindemuttern sich mit der Zeit zum Beispiel durch Vibration verändert und die Grundplatte laufend nachjustiert werden muss, werden die Lagerfüße in den Gewindemuttern mit Sicherungselementen gesichert, sobald die Grundplatte ausgerichtet ist.

Bei dem Sicherungselement handelt es sich bevorzugt um eine Sperrscheibe mit einem Außendurchmesser der entweder in etwa dem Außendurchmesser der Gewindemutter entspricht oder größer ist als dieser. Die Sperrscheibe weist eine zentrale Öffnung auf mit einer Form, die der Form des Teils des Lagerfußes entspricht, an dem das Werkzeug angesetzt werden kann. Desweiteren weist die Sperrscheibe in dem Bereich, in dem sie auf einer Stirnseite der Gewindemutter aufliegt, Durchgangsbohrungen auf.

Die Gewindemutter weist an der Stirnseite, an der das Sicherungselement aufliegt, umfänglich angeordnete Sackbohrungen mit Innengewinde auf. In diese Sackbohrungen können Schrauben, die durch die Durchgangsbohrungen des Sicherungselements gesteckt werden in der Gewindemutter verschraubt werden, so dass das Sicherungselement fest mit der in der Grundplatte befestigten Gewindemutter verbunden ist und relativ zu dieser nicht mehr bewegt werden kann. Aufgrund der Form des Lagerfußes im über das Sicherungselement vorstehenden Bereich und der Form der Öffnung durch den der Lagerfuß durch das Sicherungselement vorsteht, kann jetzt der Lagerfuß nicht mehr relativ zu der Gewindemutter verdreht und damit auch nicht linear in einer Richtung senkrecht zur Grundplatte bewegt werden.

Bevorzugt sind an der Stirnseite der Gewindemutter drei Bohrungen gleichmäßig beabstandet vorgesehen, so dass zwischen den einzelnen Bohrung jeweils ein

Winkel von 120° liegt. Es können aber auch vier Bohrungen oder sechs Bohrungen vorgesehen sein, mit Winkelabständen von 90° bzw. 60°. Bevorzugt weist das Sicherungselement umfänglich zahlreiche Bohrungen auf, so dass möglichst in jeder Position des Lagerfußes in der Gewindemutter Bohrungen in dem Sicherungselement mit den Gewindebohrungen in der Stirnseite der Gewindemutter fluchten und der Lagerfuß in möglichst zahlreichen, wenn nicht allen Positionen mit der Gewindemutter verbunden werden kann.

Wenn die Gewindemutter nicht über die Oberseite der Grundplatte vorsteht, kann das Sicherungselement auch einen Außendurchmesser aufweisen, der größer ist als der Außendurchmesser der Gewindemutter. In diesem Fall sind die Gewindebohrungen in denen das Sicherungselement zum Sichern des Lagerfußes durch Schrauben gehalten wird nicht an der Stirnseite der Gewindemutter gebildet, sondern in der Grundplatte selbst. Auch diese Sicherung verhindert, dass der Lagerfuß nicht mehr in der Gewindemutter gedreht werden kann, wenn das Sicherungselement auf die Grundplatte aufgeschraubt ist. Eine eventuelle Belastung des Sicherungselements in Drehrichtung des Lagerfußes wird bei dieser Konstruktion nicht auf die Gewindemutter übertragen, sondern von der Grundplatte aufgenommen.

Bei der Grundplatte kann es sich grundsätzlich um irgendeine Grundplatte handeln. Nach der Erfindung handelt es sich aber um eine Grundplatte eines Kranteils, besonders bevorzugt um einer Gegengewichts-Grundplatte eines Krans.

Die Erfindung betrifft gemäß Anspruch 1 auch ein vorbeschriebenes Fußlager, das hergerichtet ist, um zum Beispiel in eine Grundplatte eingebaut zu werden. Solche eine einzelne Fußlagerung besteht aus der Gewindemutter, dem in die Gewindemutter eingeschraubten oder einschraubbaren Lagerfuß, dem Sicherungselement und gegebenenfalls den Schrauben, mit denen das Sicherungselement in Gewindebohrungen an der Stirnseite der Gewindemutter oder in der Grundplatte gehalten wird. Alle Merkmal des Fußlagers die in Zusammenhang mit der Fußlagerung beschrieben wurden, gelten ebenso für das Fußlager als solches, wie zum Beispiel die unterschiedlichen Abschnitte des Lagerfußes mit unterschiedlichen Querschnitten und die Ausbildung des Sicherungselements als Sicherungsscheibe mit Durchgangsbohrungen.

Im Folgend wird die Erfindung anhand eines Ausführungsbeispiels näher erläutert. Im Einzelnen zeigen die Figuren:
- Figur 1: Ausschnitt einer Grundplatte mit drei Fußlagern
- Figur 2: ein einzelnes Fußlager mit Sicherungselement
- Figur 3: Schnittansicht eines Fußlagers

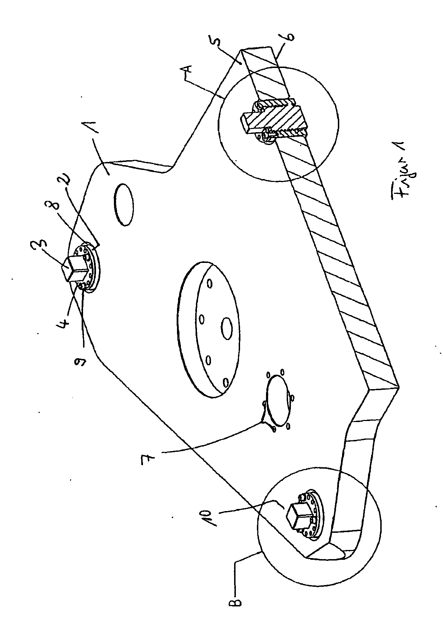

In der Figur 1 ist ein Teil einer Grundplatte 1 mit drei Lagerfüßen 2 gezeigt. Die Grundplatte 1 zeigt weitere Bohrungen oder Öffnungen, die für die hier gezeigte Erfindung nicht von Bedeutung sind und daher nicht näher erläutert werden. Die Lagerfüße 2 sind in Gewindemuttern 3, die mit der Grundplatte 1 fest verbunden sind, eingeschraubt und mittels Sicherungselementen 4 gesichert.

Bei den Sicherungselementen 4 handelt es sich um Sicherungsscheiben, die auf eine Stirnseite der Gewindemutter aufgeschraubt sind und verhindern, dass sich der Lagerfuß 2 relativ zu der Gewindemutter 2 bewegen kann, das heißt weder in die Gewindemutter 2 weiter ein- noch aus der Gewindemutter 2 herausgeschraubt werden kann.

Jeder der Lagerfüße 2 kann individuell in die jeweilige Gewindemutter 2 eingeschraubt werden, so dass mittels der Fußlagerungen 10 Unebenheiten der Auflagefläche für die Grundplatte 1 und Fertigungstoleranzen der Grundplatte 1 ausgeglichen werden können.

Eine Grundplatte 1 kann beliebig viele Bohrungen 8 für die Aufnahme von Gewindemuttern 2 aufweisen. Nicht in jeder der Bohrungen 8 muss mit einer Gewindemutter 2 sitzen, nicht in jeder Gewindemutter 2 muss eine Lagerfuß 3 eingeschraubt sein.

Die Bohrungen 7 könnten beispielsweise für eine Verschraubung des Sicherungselements 4 direkt in der Grundplatte 1 vorgesehen sein; diese Konfiguration ist nicht Teil der Erfindung.

Die Gewindemuttern 2 sind bevorzugt in die Grundplatte 1 an einer oder beiden Stirnseiten eingeschweißt. Sie können aber auch in die Grundplatte 1 eingepresst sein, wobei sie zum Beispiel vor dem Einpressen in die Grundplatte 1 einer Kältebehandlung unterzogen werden, so dass sie sich im eingesetzten Zustand durch die Erwärmung auf Umgebungstemperatur ausdehnen, wodurch die Presskraft in der Bohrung 8 erhöht wird. Auch die Verwendung von speziellen Klebstoffen soll nicht ausgeschlossen sein, wenn diese die geforderte Haltekraft für die Gewindemutter 2 in der Grundplatte 1 herstellen und halten können. Kombinationen aus den vorbeschriebenen Lösungen sind auch möglich.

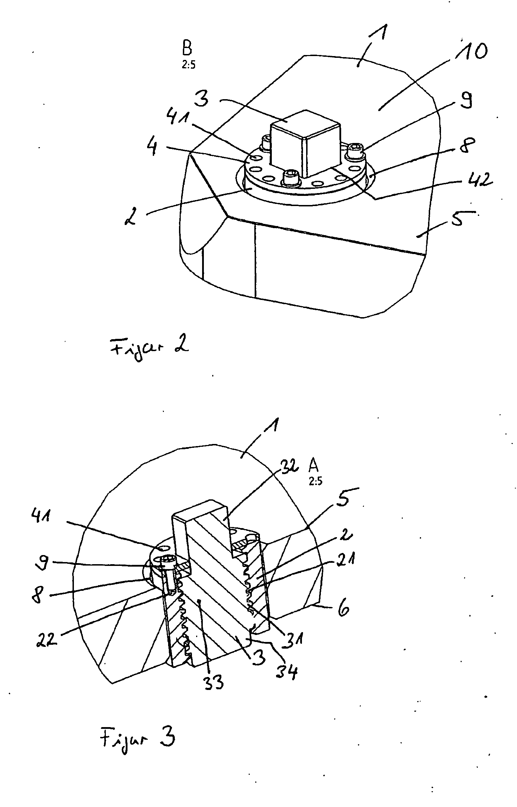

In der Figur 2 wird eine einzelne Fußlagerung 10 gezeigt. Das Sicherungselement 4 weist zahlreiche Durchgangsbohrungen 41 an seinem Umfang auf. Der Abstand der Durchgangsbohrungen 41 zueinander bestimmt wie fein der Lagerfuß 3 justiert werden kann.

Im dargestellten Ausführungsbeispiel der Fußlagerung 10 sind in der Stirnseite der Gewindemutter 1 drei nicht sichtbare Gewindebohrungen in einem Winkelabstand von je 120° eingebracht, in denen das Sicherungselement 4 mittels der Schrauben 9 gesichert ist. Der Lagerfuß 3 kann folglich nur in einer Position gesichert werden, in der eine Durchgangsbohrung 41 mit einer Gewindebohrung fluchtet. Das heiß, je mehr Durchgangsbohrungen 41 im Sicherungselement 4 vorhanden sind, desto feiner kann das Fußlager 10 eingestellt werden. Der Abstand der Durchgangsbohrungen 41 kann aber nicht beliebig klein gewählt werden, da dann die Gefahr bestünde, dass die Stege zwischen den einzelnen Durchgangsbohrungen 41 bei Belastung nachgeben. Die Anzahl der Durchgangsbohrungen 41 kann aber erhöht werden, wenn der Außenradius des Sicherungselements 4 vergrößert wird. Somit könnte ein Sicherungselement 4, das nicht mit der Stirnseite der Gewindemutter 2 sondern direkt in der Grundplatte 1 befestigt wird, eine feinere Justierung des Lagerfußes 3 ermöglichen.

In der Figur 3 ist ein Schnitt durch eine Fußlagerung 10 gezeigt. Der Lagerfuß 3 weist drei Abschnitte 32, 33, 34 auf. Einen mittleren Abschnitt 33 mit einem Außengewinde 31, das in ein Innengewinde 21 der Gewindemutter 2 eingeschraubt ist, und je einen Abschnitt 32, 34 ohne Außengewinde. Während die Abschnitte 33, 34 im gezeigten Ausführungsbeispiel einen runden Querschnitt aufweisen, hat der Abschnitt 32 einen quadratischen Querschnitt, an dem zum Beispiel ein Vierkantschlüssel angesetzt werden kann, um den Lagerfuß 3 in die Gewindemutter 2 ein- oder aus der Gewindemutter 2 herauszuschrauben.

Die Fußlagerung 10 weist weiterhin ein Sicherungselement 4 auf mit dem der Lagerfuß 3 verdrehsicher in der Gewindemutter 2 gesichert ist. Das Sicherungselement 4 weist an seinem Umfang Durchgangsbohrungen 41 auf durch die Schrauben 9 greifen und das Sicherungselement 4 in Gewindebohrungen 22 an der Stirnseite der Gewindemutter 2 festlegen. Weiterhin weist das Sicherungselement 4 eine zentrale Öffnung 42 auf, deren Form der Form des Abschnitts 33 des Lagerfußes 3 entspricht.

Die Funktion der Fußlagerung 10 ist einfach zu erklären. Die mit den Gewindemuttern 2 vorbereitete Grundplatte 1 wird vor Ort aufgebracht. Von der Oberseite her können die Fußlager 3 in die Gewindemutter 2 eingeschraubt werden, bis sie plan mit der Unterseite 6 der Grundplatte, oder bei über die Unterseite 6 vorstehender Gewindemutter 2 plan mit dem Ende der Gewindemutter 2 sind. Die Grundplatte 1 kann jetzt justiert werden, indem die Lagerfüße 3 mittels eines nicht gezeigten Werkzeugs weiter in die Gewindemutter 2 eingeschraubt werden, wodurch die Grundplatte 1 angehoben wird. Ist die Grundplatte 1 in der gewünschten Position, wird jeder der Lagerfüße 3 in seiner eingestellten Position mittels eines Sicherungselements 4 gesichert, wobei kleinste Korrekturen einzelner Lagerfußpositionen nötig sein können, um die Durchgangsbohrungen 41 exakt über den Gewindebohrungen 22 zu positionieren, damit die Schrauben 9 in die Gewinde der Gewindebohrungen 22 eingeschraubt werden können. Die Grundplatte 1 lagert jetzt auf den Abschnitten 34 der Lagerfüße 3.

### Bezugszeichenliste:

- 1: Grundplatte
- 2: Gewindemutter
- 21: Innengewinde
- 22: Gewindebohrung
- 3: Lagerfuß
- 31: Außengewinde
- 32: Abschnitt
- 33: Abschnitt
- 34: Abschnitt
- 4: Sicherungselement
- 41: Durchgangsbohrungen
- 42: Öffnung
- 5: Oberseite
- 6: Unterseite
- 7: Bohrung
- 8: Bohrung
- 9: Schraube
- 10: Fußlager, Fußlagerung

## Patentansprüche

1. Einstellbares Fußlager zum Einbau in eine Grundplatte zum Beispiel eines Kranbauteils, mit
a) einer Gewindemutter (2) mit einem Innengewinde (21),
b) einem Lagerfuß (3) mit einem zum Innengewinde (21) komplementären Außengewinde (31) und
c) einem Sicherungselement (4), mit dem der Lagerfuß (3) verdrehsicher in der Gewindemutter (2) festsetzbar ist, **dadurch gekennzeichnet, dass**
d) das Sicherungselement (4) umfänglich Durchgangsbohrungen (41) und die Gewindemutter (2) stirnseitig Sackbohrungen (22) mit Innengewinde aufweist und das Sicherungselement (4) mittels Schrauben (9) auf eine Stirnseite der Gewindemutter (2) aufschraubbar ist.

2. Fußlager nach Anspruch 1, wobei der Lagerfuß (3) einen Abschnitt (33) mit dem Außengewinde (31) und wenigstens einen Abschnitt (32, 34) ohne Außengewinde (31) aufweist.

3. Fußlager nach dem vorgehenden Anspruch, **dadurch gekennzeichnet, dass** ein Abschnitt (32, 34) ohne Außengewinde (31) an einer Seite oder an beiden Seiten an den Abschnitt (33) mit Außengewinde (31) anschließt.

4. Fußlager nach einem der vorgehenden Ansprüche, wobei das Sicherungselement (4) eine Sperrscheibe ist.

5. Fußlager nach dem vorgehenden Anspruch, wobei das Sicherungselement (4) einen Außendurchmesser aufweist, der in etwa dem Außendurchmesser der Gewindemutter (2) entspricht oder größer ist als dieser.

6. Fußlager nach einem der Ansprüche 2 bis 5, wobei wenigstens einer der Abschnitte (32, 34) ohne Außengewinde (31) bei eingeschraubtem und mit dem Sicherungselement (4) gesichertem Lagerfuß (3) über die Stirnseite/n der Gewindemutter und über das Sicherungselement (4) vorsteht.

7. Fußlager nach einem der Ansprüche 2 bis 6, wobei der Abschnitt (33) mit Außengewinde (31) eine von dem/den anschließenden Abschnitt/-en (32, 34) unterschiedliche Querschnittform aufweist und das Sicherungselement (4) eine zentrale Öffnung (42) hat, die der Form eines der Abschnitte (32, 34) ohne Außengewinde (31) des Lagerfußes (3) angepasst ist.

8. Einstellbare Fußlagerung für Kranbauteile, mit
a) einer Grundplatte (1) mit einer Bohrung (8), und
b) einem Fußlager nach einem der Ansprüche 1 bis 7.

9. Fußlagerung nach Anspruch 8, wobei die Bohrung (8) eine Durchgangsbohrung ist, die sich von der Oberseite (5) der Grundplatte (1) bis zur Unterseite (6) der Grundplatte (1) erstreckt.

10. Fußlagerung nach einem der Ansprüche 8 oder 9, wobei die Gewindemutter (2) in die Bohrung (8) eingeschweißt ist.

11. Fußlagerung nach einem der Ansprüche 8 bis 10, wobei es sich bei der Grundplatte (1) um eine Gegengewichts-Grundplatte eines Kranes handelt.

## Claims

1. An adjustable foot bearing for installation in a base plate, for example a base plate of a crane sub-assembly, comprising:
a) a threaded nut (2) comprising an inner thread (21);
b) a bearing foot (3) comprising an outer thread (31) which is complementary to the inner thread (21); and
c) a securing element (4) with which the bearing foot (3) can be fixed, rotationally secure, in the threaded nut (2), **characterised in that**
d) the securing element (4) circumferentially comprises through-bores (41), and the threaded nut (2) comprises blind bores (22) with an inner thread on its front side, and the securing element (4) can be screwed onto a front side of the threaded nut (2) by means of screws (9).

2. The foot bearing according to claim 1, wherein the bearing foot (3) comprises a portion (33) with the outer thread (31) and comprises at least one portion (32, 34) with no outer thread (31).

3. The foot bearing according to the preceding claim, **characterised in that** a portion (32, 34) with no outer thread (31) adjoins the portion (33) with the outer thread (31) on one side or on both sides.

4. The foot bearing according to any one of the preceding claims, wherein the securing element (4) is a locking disc.

5. The foot bearing according to the preceding claim, wherein the securing element (4) exhibits an outer diameter which approximately corresponds to or is greater than the outer diameter of the threaded nut (2).

6. The foot bearing according to any one of claims 2 to 5, wherein at least one of the portions (32, 34) with no outer thread (31) protrudes beyond the front side(s) of the threaded nut and beyond the securing element (4) when the bearing foot (3) is screwed in and secured with the securing element (4).

7. The foot bearing according to any one of claims 2 to 6, wherein the portion (33) with the outer thread (31) exhibits a cross-sectional shape which is different from the adjoining portion(s) (32, 34), and the securing element (4) has a central opening (42) which is adapted to the shape of one of the portions (32, 34) of the bearing foot (3) with no outer thread (31).

8. An adjustable footing support for crane sub-assemblies, comprising:
a) a base plate (1) with a bore (8); and
b) a foot bearing according to any one of claims 1 to 7.

9. The footing support according to claim 8, wherein the bore (8) is a through-bore extending from the upper side (5) of the base plate (1) to the lower side (6) of the base plate (1).

10. The footing support according to any one of claims 8 or 9, wherein the threaded nut (2) is welded into the bore (8).

11. The footing support according to any one of claims 8 to 10, wherein the base plate (1) is a counterweight base plate of a crane.

## Revendications

1. Palier inférieur réglable pour un montage dans une plaque de base, par exemple d'un composant de grue, comportant :
a) un écrou fileté (2) comportant un filetage intérieur (21),
b) une base de palier (3) comportant un filetage extérieur (31) complémentaire du filetage intérieur (21) et
c) un élément d'arrêt (4) avec lequel la base de palier (3) peut être fixée, bloquée en rotation, dans l'écrou fileté (2), **caractérisé en ce que**
d) l'élément d'arrêt (4) comporte de manière circonférentielle des alésages traversants (41) et l'écrou fileté (2) comporte sur la face avant des alésages borgnes (22) munis d'un filetage intérieur, et l'élément d'arrêt (4) peut être vissé sur une face avant de l'écrou fileté (2) au moyen de vis (9).

2. Palier inférieur selon la revendication 1, dans lequel la base de palier (3) comporte une partie (33) munie du filetage extérieur (31) et au moins une partie (32, 34) sans filetage extérieur (31).

3. Palier inférieur selon la revendication précédente, **caractérisé en ce qu'**une partie (32, 34) sans filetage extérieur (31) est adjacente à une face ou aux deux faces de la partie (33) munie du filetage extérieur (31).

4. Palier inférieur selon l'une quelconque des revendications précédentes, dans lequel l'élément d'arrêt (4) est un disque de blocage.

5. Palier inférieur selon la revendication précédente, dans lequel l'élément d'arrêt (4) présente un diamètre extérieur qui correspond approximativement au diamètre extérieur de l'écrou fileté (2) ou est plus grand que celui-ci.

6. Palier inférieur selon l'une quelconque des revendications 2 à 5, dans lequel au moins une des parties (32, 34) sans filetage extérieur (31) fait saillie au-delà de la (des) face(s) avant de l'écrou fileté et au-delà de l'élément d'arrêt (4) lorsque la base de palier (3) est vissée et arrêtée avec l'élément d'arrêt (4).

7. Palier inférieur selon l'une quelconque des revendications 2 à 6, dans lequel la partie (33) munie du filetage extérieur (31) a une forme de section transversale différente de la (des) partie(s) adjacente(s) (32, 33), et l'élément d'arrêt (4) a une ouverture centrale (42) qui est adaptée à la forme de l'une des parties (32, 34) sans filetage extérieur (31) de la base de palier (3).

8. Support inférieur réglable pour des sous-ensembles de grue, comportant :
a) une plaque de base (1) avec un alésage (8), et
b) une base de palier selon l'une quelconque des revendications 1 à 7.

9. Support inférieur selon la revendication 8, dans lequel l'alésage (8) est un alésage traversant qui s'étend de la face supérieure (5) de la plaque de base (1) jusqu'à la face inférieure (6) de la plaque de base (1).

10. Support inférieur selon l'une quelconque des revendications 8 ou 9, dans lequel l'écrou fileté (2) est soudé dans l'alésage (8).

11. Support inférieur selon l'une quelconque des revendications 8 à 10, dans lequel la plaque de base (1) est une plaque de base de contrepoids d'une grue.
